# EUROPÄISCHE PATENTSCHRIFT

(11) **EP 2 177 688 B1**
(45) Veröffentlichungstag und Bekanntmachung des Hinweises auf die Patenterteilung: **01.03.2017**
(21) Anmeldenummer: 09012891.9
(22) Anmeldetag: 12.10.2009
(51) Int. Cl.: E04F 17/00, E04F 15/14, F16B 2/20

(54) **Klemmelement und Rinnenkörperanordnung**
Clamping element and internal casing assembly
Elément de serrage et agencement de caniveau

(30) Priorität: 15.10.2008 DE 102008051761; 25.02.2009 DE 102009010582
(43) Veröffentlichungstag der Anmeldung: 21.04.2010
(73) Patentinhaber: Dallmer GmbH & Co. KG, 59757 Arnsberg (DE)
(72) Erfinder: Dallmer, Johannes, 59757 Arnsberg (DE)
(74) Vertreter: Brune, Axel

(56) Entgegenhaltungen:
- DE-U- 7 423 137
- DE-U1-202007 003 376
- US-A- 2 908 059

## Beschreibung

Die vorliegende Erfindung betrifft ein Klemmelement gemäß Anspruch 1, sowie eine Rinnenkörperanordnung gemäß dem Oberbegriff des Anspruchs 11.

Eine Rinnenkörperanordnung, umfassend eine Ablaufrinne und eine Anzahl von Fliesenprofilsegmenten, ist hinreichend bekannt.

Die Fliesenprofilsegmente werden zur Montage der Rinnenkörperanordnung um die Ablaufrinne angeordnet. Soweit hierzu drei Fliesenprofilsegmente zur Anwendung gelangen, ergibt sich eine im Wesentlichen C-förmige Gestalt, soweit vier Fliesenprofilsegmente zur Anwendung kommen, ergibt sich in der Draufsicht eine eher rechteckförmige Gestalt.

In einem nachfolgenden Montageschritt wird Fliesenkleber aufgetragen und Fliesen in den Flieserikleber gelegt. Die Fliesenprofilsegmente sorgen einerseits für einen sauberen Abschluss der Fliesen gegenüber der Ablaufrinne. Andererseits verstärken die Fliesenprofilsegmente den Bereich um die Ablaufrinne.

Bei der Montage der Rinnenkörperanordnung stellt sich das Problem, dass die Fliesenprofilsegmente nicht befestigt sind und durch Montagetätigkeiten verrutschen können. Im Ergebnis ergibt sich eine unansehnliche oder gar mängelbehaftete Rinnenkörperanordnung.

Hier setzt die vorliegende Erfindung an und macht es sich zur Aufgabe, ein Klemmelement zur Montage einer Rinnenkörperanordnung vorzuschlagen, welches die Montage einer Rinnenkörperanordnung erleichtert und eine stets ordnungsgemäße Montage der Rinnenkörperanordnung gewährleisten kann.

Erfindungsgemäß wird diese Aufgabe durch ein Klemmelement zur Montage einer Rinnenkörperanordnung mit einer Ablaufrinne und Fliesenprofilsegmenten gelöst, umfassend eine erste Klemmanordnung, eine zweite Klemmanordnung und eine dritte Klemmanordnung, die zur lösbaren Verbindung mit Fliesenprofilsegmenten eingerichtet sind, sowie mindestens eine Anlageeinrichtung, die zur Anlage an die Ablaufrinne eingerichtet ist. Ein derartiges Klemmelement ermöglicht eine genaue Positionierung, insbesondere Ausrichtung und Fixierung, von einzelnen Fliesenprofilsegmenten zu einem mindestens C-förmigen Rahmen, der einen sauberen Abschluss der Bodenfliese zu einer Rinnenkörperanordnung in der Ebene bildet.

Weitere vorteilhafte Ausgestaltungen des erfindungsgemäßen Klemmelements ergeben sich aus den Merkmalen der Unteransprüche.

Eine besonders vorteilhafte Weiterbildung des vorgeschlagenen Klemmelements ergibt sich dadurch, dass an allen vier Seiten des Klemmelements eine Anlageeinrichtung, jedoch nur an drei Seiten des Klemmelements eine Klemmanordnung vorgesehen ist, insbesondere an einer ersten Seite der Grundplatte des Klemmelements die erste Klemmanordnung und die erste Anlageeinrichtung vorgesehen ist, wobei an einer zweiten Seite der Grundplatte des Klemmelements die zweite Klemmanordnung und die zweite Anlageeinrichtung vorgesehen ist, wobei an einer dritten Seite der Grundplatte des Klemmelements die dritte Klemmanordnung und die dritte Anlageeinrichtung vorgesehen ist, wobei an einer vierten Seite der Grundplatte des Klemmelements die vierte Anlageeinrichtung vorgesehen ist, und wobei an der vierten Seite keine Klemmanordnung vorgesehen ist. Dadurch, dass eine Klemmanordnung nur an drei Seiten des Klemmelements vorgesehen ist, wird die Anwendung des Klemmelements sowohl zur Fixierung und Positionierung von drei zu einem C-förmigen Rahmen und vier zu einem rechteckförmigen Rahmen angeordneten Klemmelementen ermöglicht. Durch Drehung des Klemmelements um 90° gegenüber einer Montagesituation mit vier Fliesenprofilelementen ist auch die Bildung eines C-förmigen Rahmens möglich. Dies gilt selbstverständlich auch vice versa. Um eine relative Ausrichtung von dem gebildeten viereckigen Rahmen oder dem C-förmigen Rahmen zu der Ablaufrinne zu erhalten, wird das Klemmelemente in der Ablaufrinne aufgenommen, insbesondere im Bereich der Stirnwände zentriert.

In einer weiteren vorteilhaften Ausgestaltung des vorgeschlagenen Klemmelements kann vorgesehen sein, dass mindestens eine Anlageeinrichtung mit mindestens einem, vorzugsweise zwei, Distanzelementen ausgestattet ist, wobei es sich bei dem Distanzelement um einen schmalen rechteckförmigen Steg handelt. Durch die seitlich angebrachten Stege wird vermieden, dass es eine Überschneidung von Klemmelement und Wandfliesen bei einer Rinnenkörperanordnung für den Einbau im Wandbereich gibt.

In einer bevorzugten Ausführungsform des Klemmelements kann vorgesehen sein, dass die erste, zweite und dritte Klemmanordnung mindestens einen ersten Klemmarm und einen zweiten Klemmarm, vorzugsweise zwei Paare von ersten Klemmarmen und von zweiten Klemmarmen aufweist, wobei der erste Klemmarm zur Befestigung einer ersten Ausführungsform von Fliesenprofilsegmenten eingerichtet ist, wobei der zweite Klemmarm zur Befestigung einer weiteren Ausführungsform von Fliesenprofilsegmenten eingerichtet ist. Oft unterscheiden sich die Fliesenprofilsegmente durch die Dicke der Schenkel bzw. eines Schenkels. Ein Klemmelement mit derartig ausgestalteten Klemmarmen ermöglicht jedoch die Befestigung von Fliesenprofilsegmenten mit unterschiedlichen Dicken und erhöht so die Einsatzmöglichkeiten des Klemmelements. Grundsätzlich können beliebig viele unterschiedliche Klemmarme bzw. Paare oder Gruppen von Klemmarmen für jeweils unterschiedliche Fliesenprofilsegmente vorgesehen sein.

In einer möglichen Ausgestaltung des Klemmelements kann entsprechend vorgesehen sein, dass zwischen dem Klemmarm und der Anlageeinrichtung ein Aufnahmebereich für einen Abschnitt eines Fliesenprofilsegments ausgebildet wird, wobei der erste Klemmarm einen ersten Aufnahmebereich ausbildet, wobei der zweite Klemmarm einen weiteren Aufnahmebereich ausbildet, wobei sich die Aufnahmebereiche hinsichtlich ihrer Abmessungen unterscheiden. Auf diese Art und Weise können die Klemmarme an die unterschiedlich ausgestalteten Fliesenprofilsegmente, insbesondere an die unterschiedlich dicke Fliesenprofilsegmente, angepasst werden.

In einer weiteren vorteilhaften Ausgestaltung kann entsprechend vorgesehen sein, dass mindestens einer der Klemmarme, vorzugsweise der bzw. die Klemmarme mit den kleineren Aufnahmebereichen, dazu eingerichtet sind, durch Abkneifen oder Absägen entfernt zu werden. Durch diese Maßnahme kann das Klemmelement auf einfache Art und Weise an Fliesenprofilsegment angepasst werden, indem die nicht benötigten bzw. auch störenden Klemmarme entfernt werden.

Es kann vorteilhafter Weise für ein erfindungsgemäßes Klemmelement vorgesehen sein, dass es sich bei dem Distanzelement (62) um einen Steg, insbesondere einen schmalen, vorzugsweise rechteckförmigen, runden oder halbkreisförmigen Steg handelt.

Auch kann vorteilhafterweise für ein erfindungsgemäßes Klemmelement vorgesehen sein, dass mindestens einer der Anlageeinrichtungen (54, 55, 56, 57) mit einer Aussparung (64), insbesondere einer halbkreisförmigen Aussparung, ausgestattet ist.

Auch kann vorteilhafterweise für ein erfindungsgemäßes Klemmelement vorgesehen sein, dass der Klemmarme (63) einen ersten Abschnitt (58) und einen zweiten Abschnitt (59) aufweist, wobei der erste Abschnitt (58) in der Ebene der Grundplatte (60) liegt oder zumindest parallel zur Grundplatte (60) ausgerichtet ist, wobei der zweite Abschnitt (59) senkrecht oder zumindest annähernd senkrecht zu dem ersten Abschnitt (58) ausgerichtet ist.

Eine weitere Aufgabe der vorliegenden Erfindung liegt darin, eine Rinnenkörperanordnung, umfassend mindestens eine Ablaufrinne, ein erstes Fliesenprofilsegment, ein zweites Fliesenprofilsegment und ein drittes Fliesenprofilsegment vorzuschlagen, die sich auf einfache Art und Weise montieren lässt, die sich insbesondere durch eine präzise Ausrichtung der Fliesenprofilsegmente zueinander auszeichnet, welche auch durch Montagevorgänge nicht beeinflusst werden kann.

Erfindungsgemäß wird diese Aufgabe dadurch gelöst, dass zwischen der Ablaufrinne und den Fliesenprofilsegmenten mindestens ein erfindungsgemäßes Klemmelement angeordnet ist. Das Klemmelement fixiert die Fliesenprofilselemente vorübergehend während der Montage der Rinnenkörperanordnung. Ferner werden die Fliesenprofilelemente durch das Klemmelement gegenüber der Ablaufrinne ausgerichtet.

Weitere vorteilhafte Weiterbildungen der vorgeschlagenen Rinnenkörperanordnung ergeben sich durch die Merkmale der Unteransprüche.

Es kann vorteilhafter Weise für eine erfindungsgemäße Rinnenkörperanordnung vorgesehen sein, dass es sich bei dem Fliesenprofilsegment (41, 42, 43, 44) um ein längliches, im Querschnitt L-förmiges Profil handelt, umfassend einen ersten Schenkel (411) und einen zweiten Schenkel (412).

Auch kann vorteilhafter Weise für eine erfindungsgemäße Rinnenkörperanordnung vorgesehen sein, dass der erste Schenkel (411) eine Anzahl von Aussparungen (413) zur verbesserten Verbindung mit einem Fliesenkleber oder Mörtel aufweist.

Auch kann vorteilhafter Weise für eine erfindungsgemäße Rinnenkörperanordnung vorgesehen sein, dass der zweite Schenkel (412) zur lösbaren Verbindung mit einer der Klemmanordnungen (51, 52, 53) eingerichtet ist.

Auch kann vorteilhafter Weise für eine erfindungsgemäße Rinnenkörperanordnung vorgesehen sein, dass die Ablaufrinne (1) abschnittsweise von einer flachen Auflage (2) und abschnittsweise von einer L-förmigen Auflage (3) umgeben ist.

Auch kann vorteilhafter Weise für eine erfindungsgemäße Rinnenkörperanordnung vorgesehen sein, dass die Ablaufrinne (1) von einer flachen Auflage (2) umgeben ist.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine erfindungsgemäße Rinnenkörperanordnung mit Klemmelement in einer Draufsicht (Ausführungsform mit vier Fliesenprofilsegmenten);

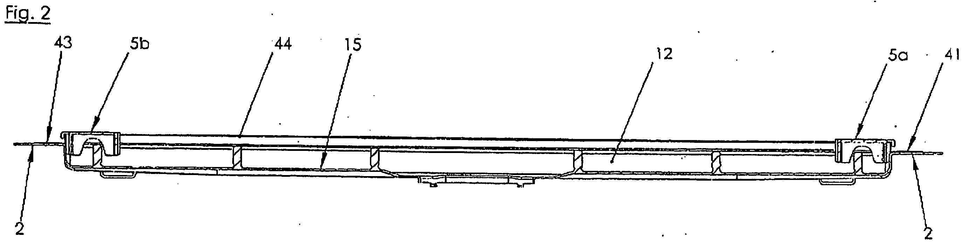

- Fig. 2: eine erfindungsgemäße Rinnenkörperanordnung mit Klemmelement in einer seitlichen Schnittansicht (Ausführungsform mit vier Fliesenprofilsegmenten);

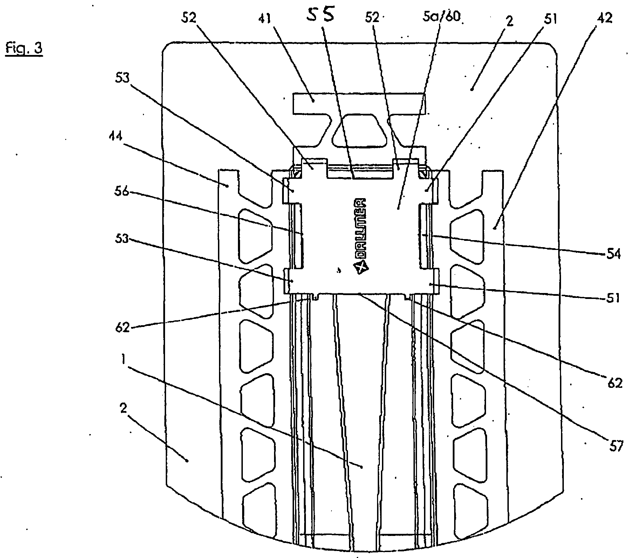

- Fig. 3: eine Detaildarstellung einer erfindungsgemäßen Rinnenkörperanordnung mit Klemmelement in einer perspektivischen Ansicht (Ausführungsform mit vier Fliesenprofilsegmenten);

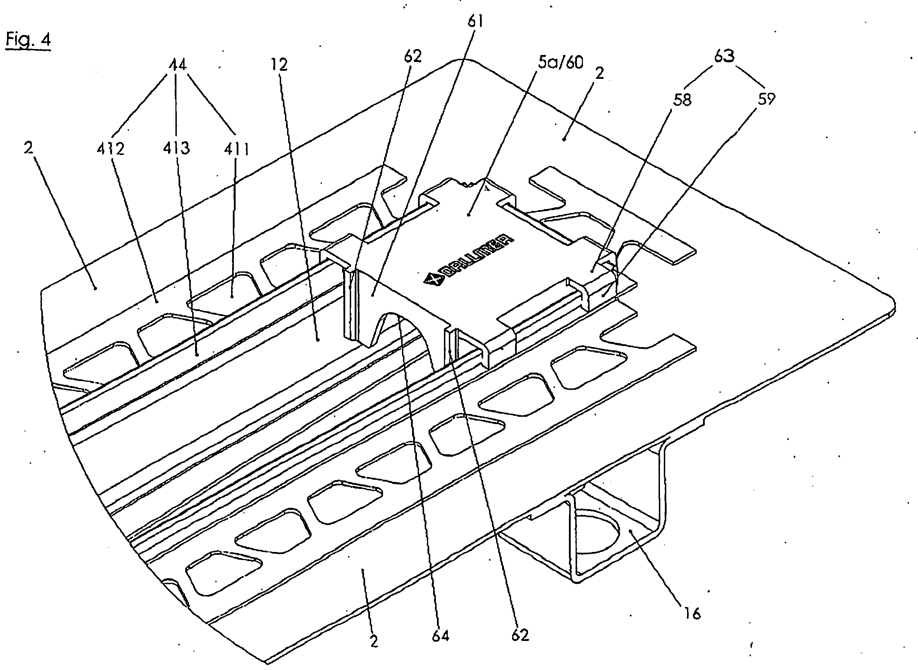

- Fig. 4: eine Detaildarstellung einer erfindungsgemäßen Rinnenkörperanordnung mit Klemmelement in einer Draufsicht (Ausführungsform mit vier Fliesenprofilsegmenten);

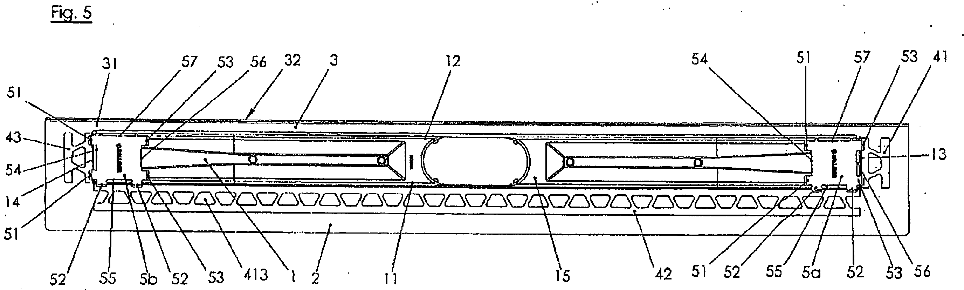

- Fig. 5: eine erfindungsgemäße Rinnenkörperanordnung mit Klemmelement in einer Draufsicht (Ausführungsform mit drei Fliesenprofilsegmenten);

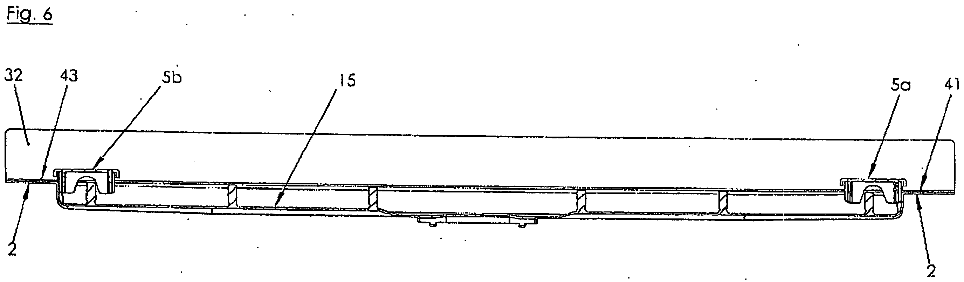

- Fig. 6: eine erfindungsgemäße Rinnenkörperanordnung mit Klemmelement in einer seitlichen Schnittansicht (Ausführungsform mit drei Fliesenprofilsegmenten);

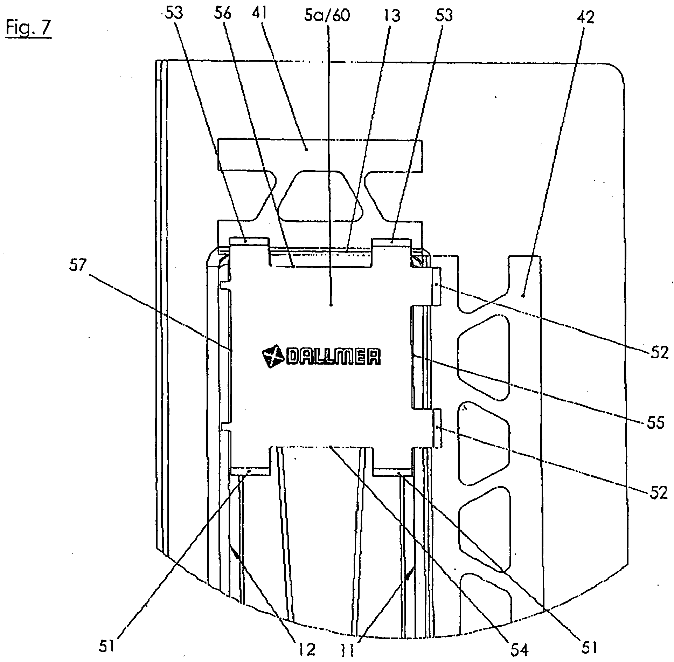

- Fig. 7: eine Detaildarstellung einer erfindungsgemäßen Rinnenkörperanordnung mit Klemmelement in einer perspektivischen Ansicht (Ausführungsform mit drei Fliesenprofilsegmenten);

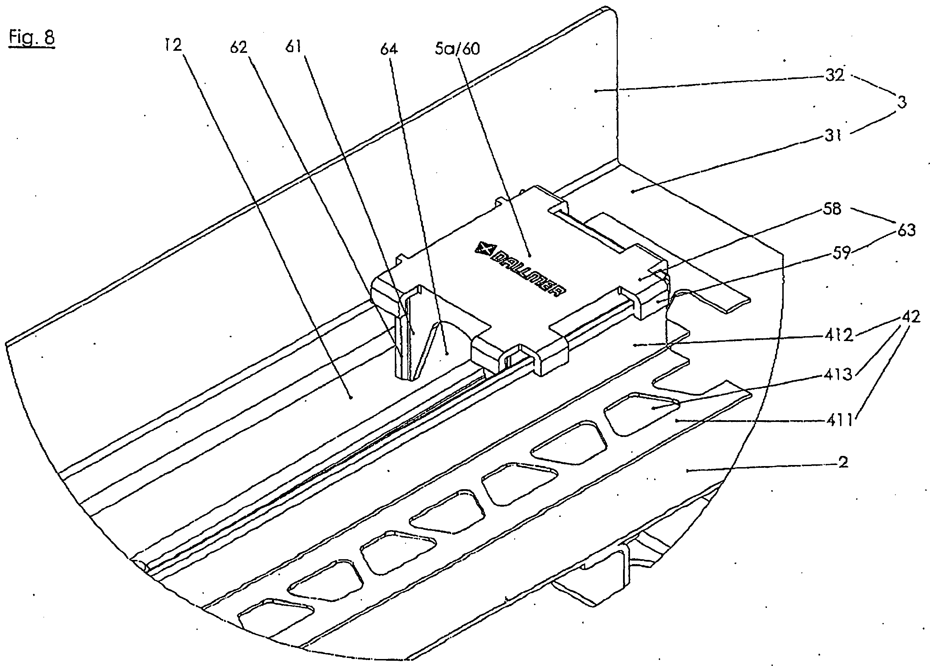

- Fig. 8: eine Detaildarstellung einer erfindungsgemäßen Rinnenkörperanordnung mit Klemmelement in einer Draufsicht (Ausführungsform mit drei Fliesenprofilsegmenten);

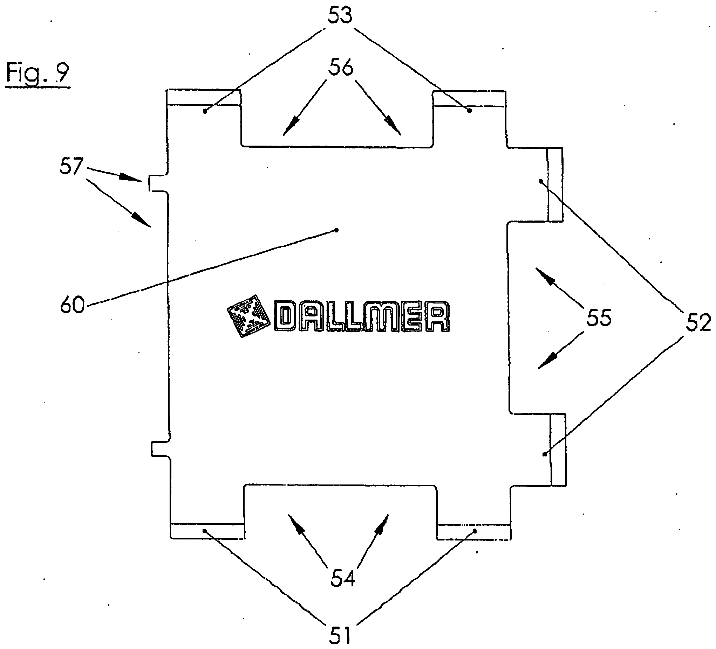

- Fig. 9: ein erfindungsgemäßes Klemmelement in einer Draufsicht;

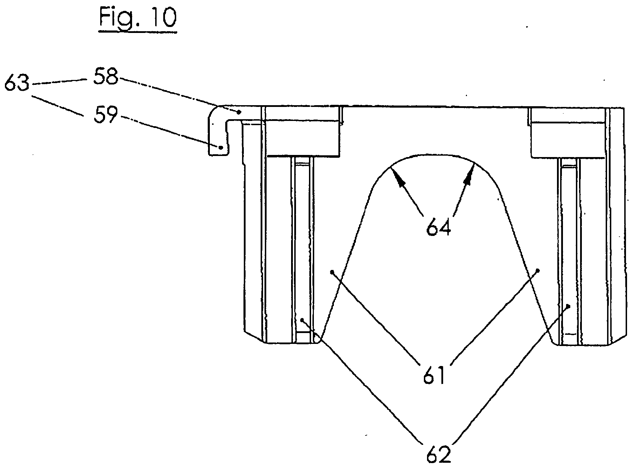

- Fig. 10: ein erfindungsgemäßes Klemmelement in einer seitlichen Ansicht;

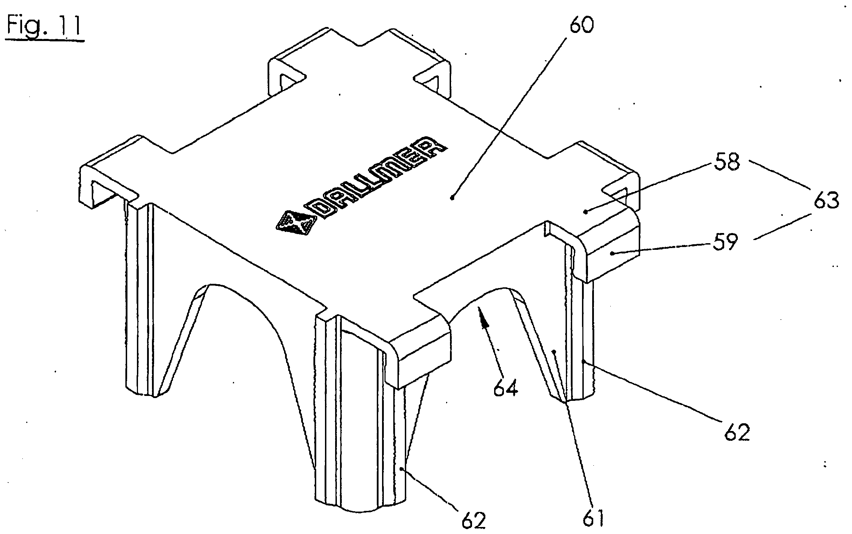

- Fig. 11: ein erfindungsgemäßes Klemmelement in einer perspektivischen Ansicht;

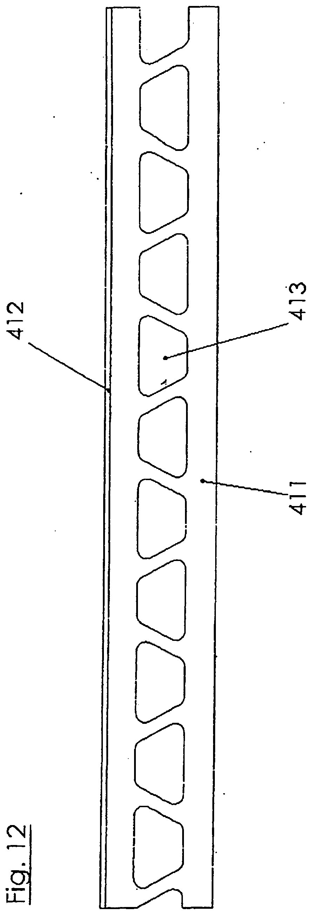

- Fig. 12: ein Fliesenprofilsegment in einer Draufsicht;

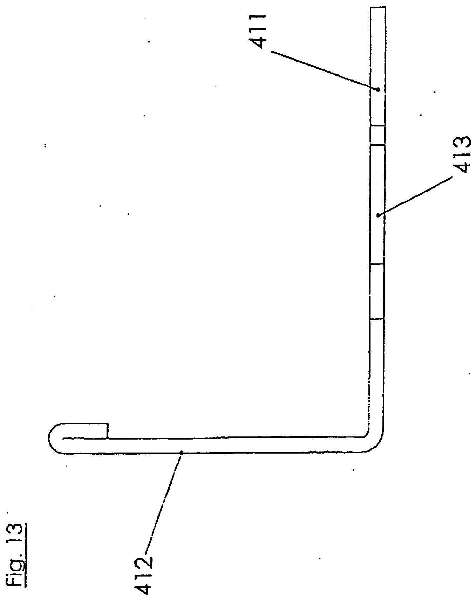

- Fig. 13: ein Fliesenprofilsegment in einer seitlichen Ansicht;

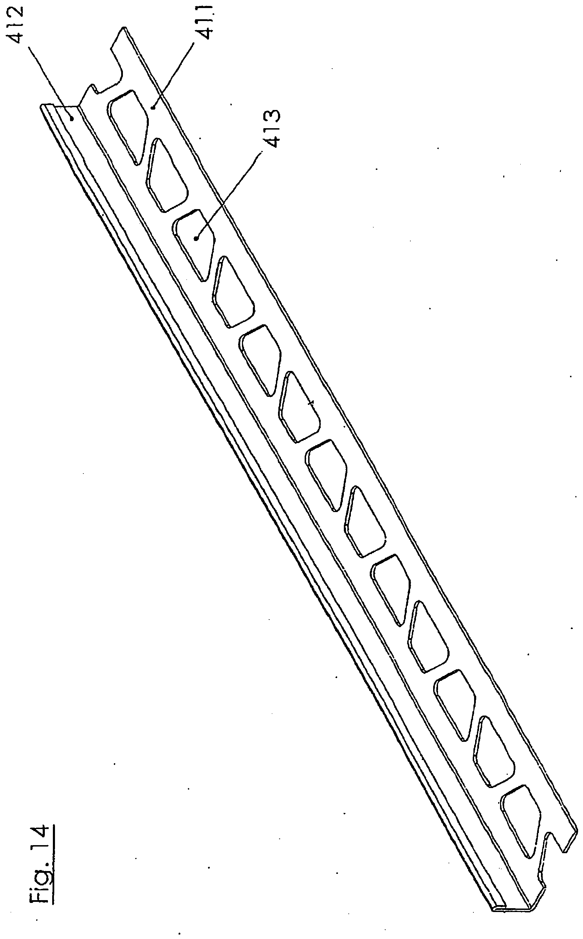

- Fig. 14: ein Fliesenprofilsegment in einer perspektivischen Ansicht;

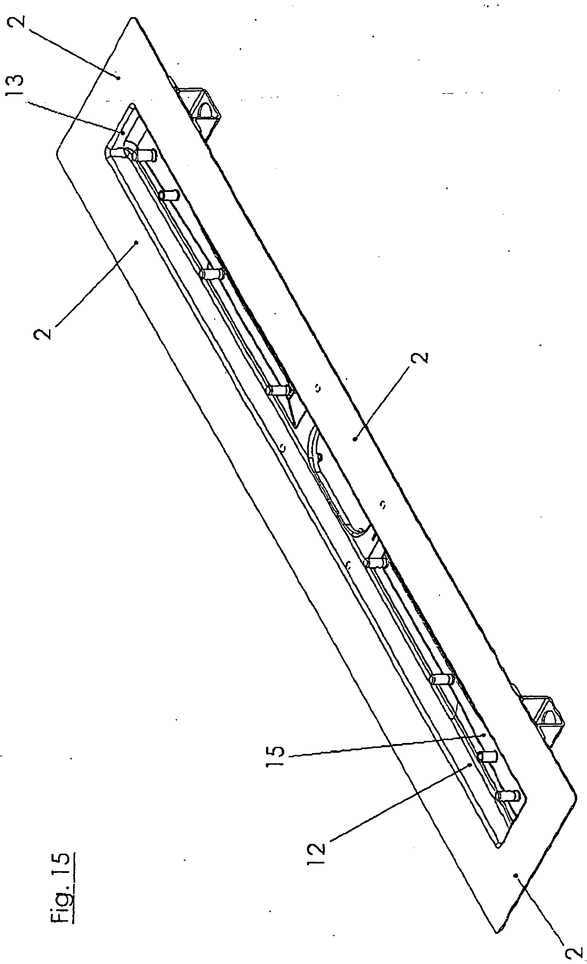

- Fig. 15: eine Ablaufrinne mit durchgehend flacher Auflage in einer perspektivischen Ansicht (ohne Klemmelemente und Fliesenprofilanordnungen);

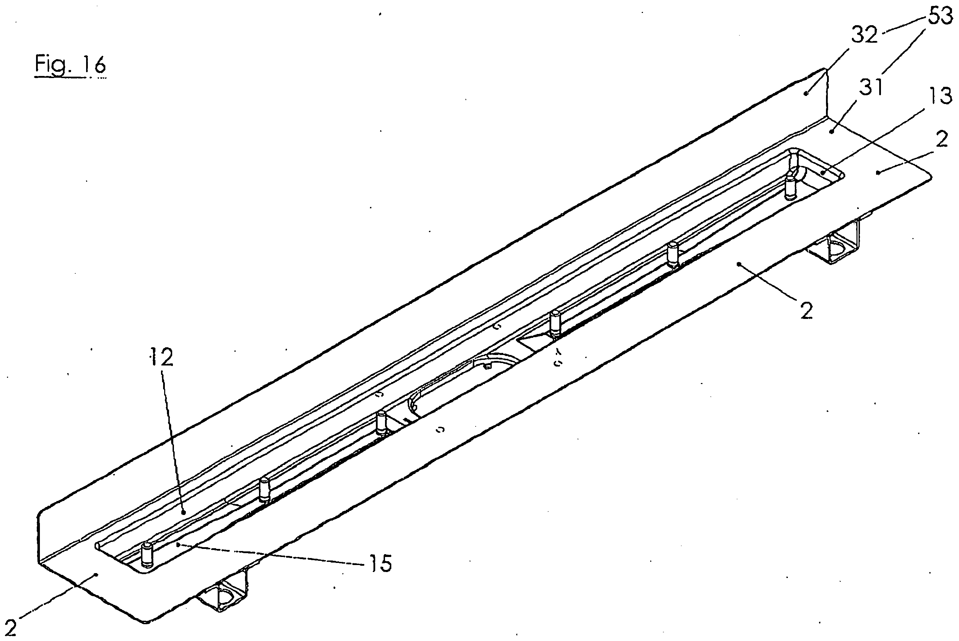

- Fig. 16: eine Ablaufrinne mit teilweise L-förmiger Auflage in einer perspektivischen Ansicht (ohne Klemmelemente und Fliesenprofilanordnungen);
- Fig. 17: ein Klemmelement mit abtrennbaren Klemmarmen für unterschiedliche Fliesenprofilsegmente in einer Draufsicht;
- Fig. 18: ein Klemmelement mit abtrennbaren Klemmarmen für unterschiedliche Fliesenprofilsegmente in einer perspektivischen Ansicht.

Folgende Bezugszeichen werden in den Figuren verwendet:
- 1: Ablaufrinne
- 11: erste Seitenfläche
- 12: zweite Seitenfläche
- 13: erste Stirnfläche
- 14: zweite Stirnfläche
- 15: Boden
- 16: Stützelemente

- 2: Auflage
- 3: L-förmige Auflage
- 31: erster Schenkel
- 32: zweiter Schenkel

- 41: erstes Fliesenprofilsegment
- 42: zweites Fliesenprofilsegment
- 43: drittes Fliesenprofilsegment
- 44: viertes Fliesenprofilsegment
- 411: erster Schenkel
- 412: zweiter Schenkel
- 413: Aussparung

- 5a: erstes Klemmelement
- 5b: zweites Klemmelement
- 51: erste Klemmanordnung
- 52: zweite Klemmanordnung
- 53: dritte Klemmanordnung
- 54: erste Anlageeinrichtung
- 55: zweite Anlageeinrichtung
- 56: dritte Anlageeinrichtung
- 57: vierte Anlageeinrichtung
- 58: erster Abschnitt (Klemmarm)
- 59: zweiter Abschnitt (Klemmarm)
- 60: Grundplatte
- 61: Anlagefläche
- 62: Distanzelement
- 63: Klemmarm
- 64: Aussparung
- 65: Perforation/Markierung/Sollbruchstelle

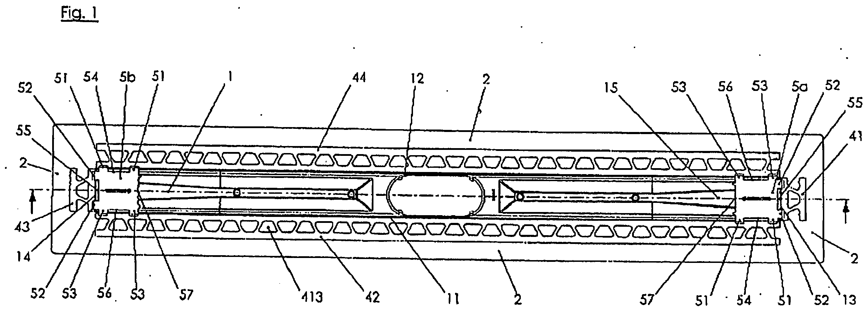

Zunächst wird auf Fig. 1 Bezug genommen.

Eine erfindungsgemäße Rinnenkörperanordnung umfasst im Wesentlichen eine Ablaufrinne 1, eine Auflage 2, 3, mindestens drei Fliesenprofilsegmente 41, 42, 43, 44 sowie mindestens ein, vorzugsweise zwei Klemmelemente 5a, 5b.

Die Ablaufrinne 1 ist im Wesentlichen als länglicher wannenförmiger Körper zum Auffangen und Ableiten von Wasser ausgebildet. Die Ablaufrinne weist eine erste längliche Seitenfläche 11, eine zweite längliche Seitenfläche 12, eine erste Stirnfläche 13, eine zweite Stirnfläche 14 und einen länglichen Boden 15 auf.

In einer ersten Ausführungsform des Rinnenkörpers umschließt die Auflage 2 die Ablaufrinne nach Art eines flachen umlaufenden Kragens und dient im Wesentlichen als Auflage für die Fliesenprofilsegmente 41, 42, 43, 44 sowie letztendlich der aufgelegten Fliesen. Ferner ist die Auflage 2 auf ihrer Unterseite mit Anschlüssen für Stützelemente 16 versehen, in denen beispielsweise eine Höhenverstellung aufgenommen werden kann.

In einer zweiten Ausführungsform ist die Rinnenkörperanordnung ähnlich ausgestaltet, insbesondere ist die Auflage abschnittsweise als L-förmige Auflage 3 ausgestaltet. Dieser Teil der Auflage weist eine im Querschnitt L-förmige Gestalt auf. Entsprechend weist die L-förmige Auflage 3 einen ersten Schenkel 31 und einen zweiten Schenkel 32 auf. Der erste Schenkel 31 ist in einer Ebene mit der übrigen Auflage 2 ausgerichtet, während der zweite Schenkel 32 einen rechten Winkel zu dem ersten Schenkel 31 einnimmt. Die zweite Ausführungsform der Rinnenkörperanordnung ist für eine wandnahe Montage vorgesehen. Der zweite Schenkel 32 dient im Wesentlichen als Wandanschlag. Die L-förmige Auflage 3 ist vorzugsweise parallel und auf Seiten der zweiten Seitenfläche 12 der Ablaufrinne 1 vorgesehen.

Bei der Rinnenkörperanordnung, sowohl in der ersten, als auch in der zweiten Ausführungsform, handelt es sich vorzugsweise um Blechformteile, beispielsweise aus einem Edelstahlblech. Denkbar sind selbstverständlich auch andere Materialien, wie beispielsweise Kunststoff oder Aluminium.

Bei den Fliesenprofilsegmenten 41, 42, 43, 44 handelt es sich im Wesentlichen um längliche, im Querschnitt etwa L-förmige Profile, vorzugsweise Blechprofile, umfassend einen ersten Schenkel 411 und einen zweiten Schenkel 412. Der erste, vornehmlich der breitere, Schenkel 411 des L-förmigen Fliesenprofilsegmentes liegt im verbauten Zustand auf der Auflage 2 auf. Der erste Schenkel 411 ist vorzugsweise mit Aussparungen 413, insbesondere trapezförmigen Aussparungen, versehen, die eine bessere Haftung des Fliesenklebers ermöglichen sollen. Der zweite Schenkel 412 ist vorzugsweise kürzer als der erste Schenkel 411 ausgebildet und nimmt einen rechten Winkel zu dem ersten Schenkel 411 ein. Der zweite Schenkel 412 kann verstärkt ausgeführt sein, beispielsweise durch einen umgelegten Blechabschnitt.

Das Klemmelement 5a, 5b umfasst im Wesentlichen eine rechteckförmige, vorzugsweise quadratische, Grundplatte 60, eine erste Klemmanordnung 51, eine zweite Klemmanordnung 52, eine dritte Klemmanordnung 53, sowie eine erste Anlageeinrichtung 54, eine zweite Anlageeinrichtung 55, eine dritte Anlageeinrichtung 56 und eine vierte Anlageeinrichtung 57.

Ausgehend von einer quadratischen Grundplatte 60, ist die erste Klemmanordnung 51 an einer ersten Seite, die zweite Klemmanordnung 52 an einer zweiten Seite und die dritte Klemmanordnung 53 an einer dritten Seite der Grundplatte 60 angebracht. An der verbleibenden vierten Seite der Grundplatte 60 ist keine Klemmanordnung vorgesehen.

Eine Klemmanordnung umfasst jeweils zwei Klemmarme 63. Im Wesentlichen handelt es sich bei den Klemmarmen 63 um flache L-förmige Ausleger, die einen ersten Abschnitt 58 und einen zweiten Abschnitt 59 aufweisen. Der erste Abschnitt 58 ist in einer Ebene mit der Grundplatte 60 angeordnet, während sich der zweite Abschnitt 59 endseitig des ersten Abschnitts 58 in einem rechten Winkel von dem ersten Abschnitt 58 erstreckt.

Eine Anlageeinrichtung umfasst eine Anlagefläche 61 und zwei Distanzelemente 62. Die Anlagefläche 61 wird von einer Seitenfläche gebildet, die sich senkrecht von der Grundplatte 60 erstreckt. Es ist insbesondere aus Gründen der Materialersparnis vorgesehen, dass die Seitenflächen mit einer etwa halbkreisförmigen Aussparung 64 versehen sind. Gleichzeitig dient die Aussparung 64 insbesondere dazu, Fertigungstoleranzen im Abstand zwischen der ersten Seitenfläche 11 und der zweiten Seitenfläche 12 bei der Zentrierung des Klemmelements in der Ablaufrinne durch elastische Verformung der Anlagefläche 61 auszugleichen. Ferner sind jeweils zwei Distanzelemente 62 auf der Anlagefläche 61 vorgesehen, die als schmale rechteckförmige Stege ausgestaltet sind. Die Distanzelemente 62 verlaufen senkrecht zu der Grundplatte auf der Anlagefläche 61. Grundsätzlich könnte auch auf die Distanzelemente als solches verzichtet werden und die Anlageflächen 61 könnten unmittelbar mit der Ablaufrinne 1 in Kontakt gebracht werden.

Weitere Merkmale der vorgeschlagenen Erfindung ergeben sich aus einer Funktionsbeschreibung des erfindungsgemäßen Klemmelements 5a, 5b in Zusammenschau mit der erfindungsgemäßen Rinnenkörperanordnung, insbesondere in Zusammenschau mit der Montage der erfindungsgemäßen Rinnenkörperanordnung.

Die Rinnenkörperanordnung wird in bekannter Weise auf einem Boden montiert. Anschließend werden beispielsweise vier Fliesenprofilsegmente, insbesondere ein erstes Fliesenprofilsegment 41, ein zweites Fliesenprofilsegment 42, ein drittes Fliesenprofilsegment 43 und ein viertes Fliesenprofilsegment 44, derart auf der Auflage 2 abgelegt, dass sie einen viereckigen Rahmen um die Ablaufrinne 1 bilden, wobei die ersten Schenkel 411 auf der Auflage 2 aufliegen und die zweiten Schenkel 412 der Ablaufrinne 1 zugewandt sind. Das erste Fliesenprofilsegment 41 ist parallel und in unmittelbarer Nähe zu der ersten Stirnfläche 13, das zweite Fliesenprofilsegment 42 ist parallel und in unmittelbarer Nähe zu der ersten Seitenfläche 11, das dritte Fliesenprofilsegment 43 ist parallel und in unmittelbarer Nähe zu der zweiten Stirnfläche 14 und das vierte Fliesenprofilsegment 44 ist parallel und in unmittelbarer Nähe zu der zweiten Seitenfläche 12 angeordnet.

Anschließend wird ein erstes Klemmelement 5a und ein zweites Klemmelement 5b zur vorübergehenden Fixierung und exakten Ausrichtung der Fliesenprofilsegmente 41, 42, 43, 44 jeweils im Bereich der Stirnflächen 13, 14 der Ablaufrinne 1 angebracht.

Das erste Klemmelement 5a ist derart zwischen den Fliesenprofilsegmenten 41, 42, 44 und der Ablaufrinne 1 angeordnet, dass die erste Anlageeinrichtung 54 mit der ersten Seitenfläche 11, die zweite Anlageeinrichtung 55 mit der ersten Stirnfläche 13 und die dritte Anlageeinrichtung 56 mit der zweiten Seitenfläche 12 in Kontakt treten kann. Auch ist das erste Klemmelement 5a derart zwischen den Fliesenprofilsegmenten 41, 42, 44 und der Ablaufrinne 1 angeordnet, dass die erste Klemmanordnung 51 lösbar mit dem zweiten Fliesenprofilsegment 42, die zweite Klemmanordnung 52 lösbar mit dem ersten Fliesenprofilsegment 41 und die dritte Klemmanordnung 53 lösbar mit dem vierten Fliesenprofilsegment 44 verbunden ist.

Das zweite Klemmelement 5b ist derart zwischen den Fliesenprofilsegmenten 42, 43, 44 und der Ablaufrinne 1 angeordnet, dass die erste Anlageeinrichtung 54 mit der zweiten Seitenfläche 12, die zweite Anlageeinrichtung 55 mit der zweiten Stirnfläche 14 und die dritte Anlageeinrichtung 56 mit der ersten Seitenfläche 11 in Kontakt treten kann. Auch ist das zweite Klemmelement 5b derart zwischen den Fliesenprofilsegmenten 42, 43, 44 und der Abiaufrinne 1 angeordnet, dass die erste Klemmanordnung 51 lösbar mit dem vierten Fliesenprofilsegment 44, die zweite Klemmanordnung 52 lösbar mit dem dritten Fliesenprofilsegment 43 und die dritte Klemmanordnung 53 lösbar mit dem zweiten Fliesenprofilsegment 42 verbunden ist.

Die Klemmelemente 5a, 5b werden derart zwischen die jeweils drei nächstliegenden Fliesenprofilsegmente eingesteckt, dass die Klemmarme 63 die zweiten Schenkel 412 der Fliesenprofilsegmente teilweise umgreifen können. Soweit.die Klemmelemente 5a, 5b entsprechend auf beiden Seiten der Ablaufrinne 1 angebracht werden, ist die Anordnung der vier Fliesenprofilsegmente 41, 42, 43, 44 in sich fixiert. Die Anlageeinrichtungen 54, 55, 56, 57 der Klemmelemente 5a, 5b liegen jeweils an den zugeordneten Seitenflächen 11, 12 bzw. der jeweiligen Stirnfläche 13, 14 der Ablaufrinne 1 an, so dass ebenfalls eine vorbestimmte Ausrichtung der Fliesenprofilsegmente 41, 42, 43, 44 im Hinblick auf die Ablaufrinne 1 stattfinden kann.

In einem nächsten Arbeitsgang können Fliesen in bekannter Weise bis an den Rand der zweiten Schenkel 412 der Fliesenprofilsegmente 41, 42, 43, 44 verlegt werden. Hierzu wird in der Regel ein Fliesenkleber verwendet.

In einem darauffolgenden Arbeitsgang, vorzugsweise nach einer angemessenen Aushärtung des Fliesenklebers, können die Klemmelemente 5a, 5b entfernt werden. Die Fliesenprofilsegmente 41, 42, 43, 44 sind bereits durch die in Fliesenkleber gelegten ersten Schenkel 411 fixiert und die zweiten Schenkel 412 bilden einen sauberen Abschluss zwischen den Fliesen und der Ablaufrinne 1.

Die Klemmelemente 5a, 5b können jedoch ebenfalls zur vorläufigen Fixierung und Ausrichtung von nur drei Fliesenprofilsegmenten 41, 42, 43 verwendet werden. Die Verwendung von drei Fliesenprofilsegmenten bietet sich für die oben bereits beschriebene zweite Ausführungsform der Rinnenkörperanordnung mit einer abschnittsweise L-förmigen Auflage 3 an, wenn die Rinnenkörperanordnung in unmittelbarer Nähe einer Wand angebracht werden soll. Da die Ablaufrinne 1 möglichst nahe an der Wand angeordnet sein soll, ist nicht vorgesehen, dass auf dem ersten Schenkel 31 der L-förmigen Auflage 3 ein Fliesenprofilsegment aufgelegt ist. In einer Draufsicht ergibt sich entsprechend eine C-förmige Anordnung der Fliesenprofilsegmente 41, 42, 43.

Zur Fixierung und Ausrichtung der Fliesenprofilsegmente 41, 42, 43 werden ebenfalls im Bereich der Stirnflächen 13, 14 der Ablaufrinne 1 jeweils ein Klemmelement 5a, 5b angebracht. Gegenüber dem zuvor beschriebenen Anwendungsfall sind die Klemmelemente um 90° gedreht, so dass die vierten Anlageeinrichtungen 57 der Klemmelemente nunmehr der L-förmigen Auflage 3 zugewandt sind. Es handelt sich jedoch um identische Klemmelemente 5a, 5b, wie sie auch bei einer zuvor beschriebenen Ausführungsform der Rinnenkörperanordnung zum Einsatz kommen. Es ergibt sich folgende Beziehung zwischen den Klemmanordnungen, Anlageflächen, Seitenflächen und Stirnflächen.

Das erste Klemmelement 5a ist derart zwischen den Fliesenprofilsegmenten 41, 42 und der Ablaufrinne 1 angeordnet, dass die zweite Anlageeinrichtung 55 mit der ersten Seitenfläche 11, die dritte Anlageeinrichtung 56 mit der ersten Stirnfläche 13 und die vierte Anlageeinrichtung 57 mit der zweiten Seitenfläche 12 in Kontakt treten kann. Auch ist das erste Klemmelement 5a derart zwischen den Fliesenprofilsegmenten 42, 43 und der Ablaufrinne 1 angeordnet, dass die zweite Klemmanordnung 52 lösbar mit dem zweiten Fliesenprofilsegment 42 und die dritte Klemmanordnung 53 lösbar mit dem ersten Fliesenprofilsegment 41 verbunden ist. Die erste Klemmanordnung 51 bleibt frei und ist folglich nicht mit einem Fliesenprofilsegment verbunden.

Das zweite Klemmelement 5b ist derart zwischen den Fliesenprofilsegmenten 42, 43 und der Ablaufrinne 1 angeordnet, dass die erste Anlageeinrichtung 54 mit der zweiten Stirnfläche 14, die zweite Anlageeinrichtung 55 mit der ersten Seitenfläche 11 und die vierte Anlageeinrichtung 57 mit der zweiten Seitenfläche 12 in Kontakt treten kann. Auch ist das zweite Klemmelement 5b derart zwischen den Fliesenprofilsegmenten 42, 43 und der Ablaufrinne 1 angeordnet, dass die erste Klemmanordnung 51 lösbar mit dem dritten Fliesenprofilsegment 43 und die zweite Klemmanordnung 52 lösbar mit dem zweiten Fliesenprofilsegment 42 verbunden ist. Die dritte Klemmanordnung 53 bleibt frei und ist folglich nicht, mit einem Fliesenprofilsegment verbunden.

Die jeweils vierten Seiten bzw. vierten Anlageeinrichtungen 57 der Klemmelemente 5a, 5b sind folglich der L-förmigen Auflage 3 zugewandt. Da die vierten Seiten der Klemmelemente 5a, 5b nicht mit Klemmanordnungen ausgestattet sind, kann der sich zwischen der L-förmigen Auflage 3 und der Ablaufrinne 1 ergebende Raum zur Anbringung von Fliesen genutzt werden. Die erfindungsgemäße Rinnenkörperanordnung kann folglich sehr nahe einer Wand verbaut werden. Gleichermaßen können die Vorteile der Klemmelemente 5a, 5b, insbesondere hinsichtlich einer vorübergehenden Fixierung und Ausrichtung der verbleibenden drei Fliesenprofilsegmente 41, 42, 43, ausgenutzt werden.

Die Ablaufrinne 1 und die Auflage 2 bzw. die L-förmige Auflage 3 können sowohl einteilig, als auch mehrteilig ausgeführt sein. Auch kann die Auflage 2 und die L-förmige Auflage 3 einteilig, als auch mehrteilig ausgeführt sein. Ferner kann die L-förmige Auflage 3, insbesondere deren erster Schenkel 31 und deren zweiter Schenkel einteilig oder mehrteilig ausgeführt sein.

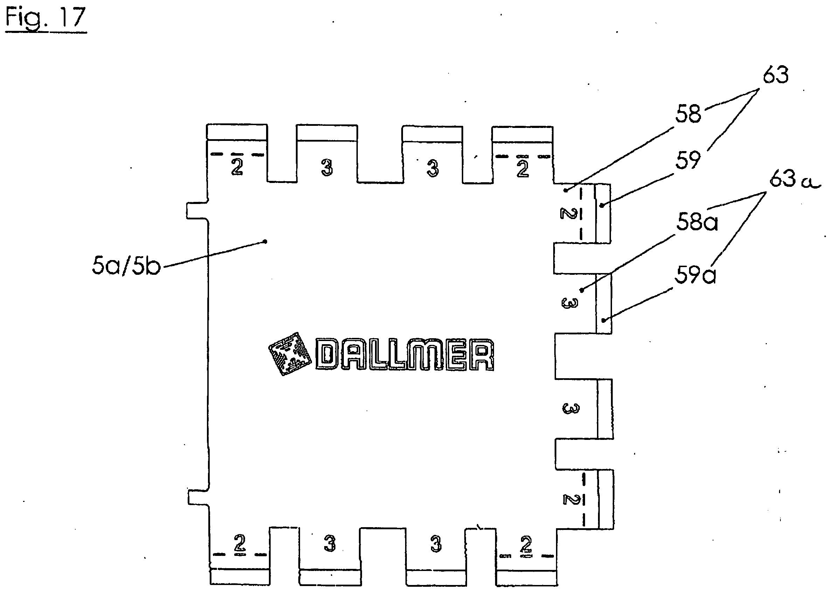

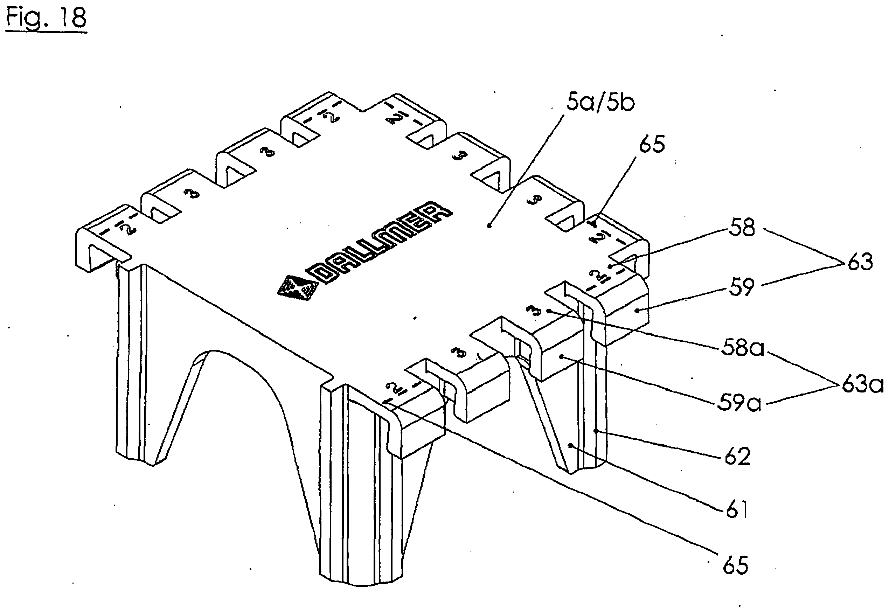

In den Fig. 17 und 18 ist ferner eine weitere bevorzugte Ausführungsform eines erfindungsgemäßen Klemmelements 5a, 5b dargestellt, welches auf Fliesenprofilsegmente mit unterschiedlichen Abmessungen, insbesondere Wandstärken, angepasst werden kann. Hierzu sind unterschiedlich ausgestaltete Klemmarme 63 und 63a vorgesehen. Es ist hier insbesondere vorgesehen, dass jeweils zwei Klemmarme 63 und zwei Klemmarme 63a auf jeweils einer Seite des Klemmelements angeordnet sind. Die Klemmarme 63 bilden insofern ein erstes Paar von Klemmarmen, während die Klemmarme 63a ein zweites Paar von Klemmarmen bilden.

Die Klemmarme 63 und 63a unterscheiden sich hier durch die Dicke des zweiten Abschnitts 59 und 59a. Soweit davon ausgegangen wird, dass zwischen den Klemmarmen 63 bzw. 63a und der Anlageeinrichtung, insbesondere dem Distanzelement 62, ein Aufnahmebereich für einen Abschnitt eines Fliesenprofilsegments ausgebildet wird, so unterscheiden sich auch die jeweiligen Aufnahmebereich der Klemmarme 63 und 63a. Denkbar sind ebenfalls unterschiedlich lange erste Abschnitte 58 bzw. 58a (hier jedoch nicht dargestellt). Durch die auf den ersten Abschnitt 58 aufgedruckte Ziffer "2" soll angedeutet werden, dass sich hier ein lichter Abstand von 2mm zwischen dem zweiten Abschnitt 59 und der Anlageeinrichtung, insbesondere dem Distanzelement 62, ergibt. Durch die auf den ersten Abschnitt 58a aufgedruckte Ziffer "3" soll entsprechend angedeutet werden, dass sich hier ein lichter Abstand von 3mm zwischen dem zweiten Abschnitt 59a und der Anlageeinrichtung, insbesondere dem Distanzelement 62, ergibt. Entsprechend ergibt sich eine bevorzugte Verbindungsmöglichkeit für Fliesenprofilsegmente, die bzw. deren zweiter Schenkel 412, eine Dicke von etwa 2 bzw. 3mm aufweisen.

Um die Klemmarme 63a nutzbar machen zu können, müssen die Klemmarme 63 entfernt werden. Hierzu ist grundsätzlich vorgesehen, dass die Klemmarme 63 dazu eingerichtet sind, dass sie durch Abkneifen oder Absägen entfernt werden können. Vorzugsweise kann hier eine Markierung 65 ggf. auch eine Perforation bzw. Sollbruchstelle auf den Klemmarmen 63 vorgesehen sein.

## Patentansprüche

1. Klemmelement (5a, 5b) zur Montage einer Rinnenkörperanordnung mit einer Ablaufrinne (1) und Fliesenprofilsegmenten (41, 42, 43, 44), wobei
- die Ablaufrinne (1) eine erste Seitenwand (11), eine zweite Seitenwand (12), eine erste Stirnwand (13), eine zweite Stirnwand (14) und einen Boden (15) aufweist, wobei
- die Fliesenprofilsegmente (41, 42, 43, 44) als längliche, im Querschnitt L-förmige Profile ausgestaltet sind, umfassend einen ersten Schenkel (411) und einen zweiten Schenkel (412), wobei
das Klemmelement umfasst:
- eine erste Klemmanordnung (51), eine zweite Klemmanordnung (52) und eine dritte Klemmanordnung (53), die zur lösbaren Verbindung mit den Fliesenprofilsegmenten eingerichtet sind, sowie
- mindestens eine Anlageeinrichtung (54, 55, 56, 57), die zur Anlage an die Ablaufrinne (1) eingerichtet ist, wobei
- die erste, zweite und dritte Klemmanordnung jeweils zwei Klemmarme (63) umfasst, wobei
- die Klemmarme (63) dazu eingerichtet sind, den jeweiligen zweiten Schenkel (412) einer der Fliesenprofilsegmente teilweise umgreifen zu können, wobei
- die Anlageeinrichtungen (54, 55, 56, 57) dazu eingerichtet sind, an den jeweils zugeordneten Seitenflächen (11, 12) bzw. der jeweiligen Stirnfläche (13, 14) der Ablaufrinne (1) anzuliegen.

2. Klemmelement nach Anspruch 1, **dadurch gekennzeichnet dass** das Klemmelement (5a, 5b) mit einer ersten Anlageeinrichtung (54), einer zweiten Anlageeinrichtung (55), einer dritten Anlageeinrichtung (56) und einer vierten Anlageeinrichtung (57) ausgestattet ist.

3. Klemmelement nach einem der vorhergehenden Ansprüche, **dadurch gekennzeichnet**, das Klemmelement (5a, 5b) eine rechteckförmige, vorzugsweise eine quadratische, Grundplatte (60) aufweist.

4. Klemmelement nach einem der vorhergehenden Ansprüche, **dadurch gekennzeichnet, dass** die zumindest eine Anlageeinrichtung (54, 55, 56, 57) eine Anlagefläche (61) aufweist, die sich senkrecht oder zumindest annähernd senkrecht von der Grundplatte (60) erstreckt.

5. Klemmelement nach einem der vorhergehenden Ansprüche, **dadurch gekennzeichnet, dass** mindestens einer der Anlageeinrichtungen (54, 55, 56, 57) mit mindestens einem, vorzugsweise zwei, Distanzelementen (62) ausgestattet ist.

6. Klemmelement nach einem der vorhergehenden Ansprüche, **dadurch gekennzeichnet, dass** die erste, zweite und dritte Klemmanordnung zwei Paare von ersten Klemmarmen (63) und von zweiten Klemmarmen (63a) aufweist, wobei der erste Klemmarm (63) zur Befestigung einer ersten Ausführungsform von Fliesenprofilsegmenten eingerichtet ist, wobei der zweite Klemmarm (63a) zur Befestigung einer weiteren Ausführungsform von Fliesenprofilsegmenten eingerichtet ist.

7. Klemmelement nach Anspruch 6, **dadurch gekennzeichnet, dass** zwischen dem Klemmarm (63, 63a) und der Anlageeinrichtung ein Aufnahmebereich für einen Abschnitt eines Fliesenprofilsegments ausgebildet wird, wobei der erste Klemmarm (63) einen ersten Aufnahmebereich ausbildet, wobei der zweite Klemmarm (63a) einen weiteren Aufnahmebereich ausbildet, wobei sich die Aufnahmebereiche hinsichtlich ihrer Abmessungen unterscheiden.

8. Klemmelement nach Anspruch 7 **dadurch gekennzeichnet, dass** mindestens einer der Klemmarme, vorzugsweise der bzw. die Klemmarme (63) mit den kleineren Aufnahmebereichen, dazu eingerichtet sind, durch Abkneifen oder Absägen entfernt zu werden.

9. Klemmelement nach Anspruch 7,**dadurch gekennzeichnet, dass** mindestens einer der Klemmarme, vorzugsweise der Klemmarm (63) mit dem kleinsten Aufnahmebereich, mit einer Markierung (65) und/oder Perforation und/oder Sollbruchstelle ausgestattet ist.

10. Klemmelement nach Anspruch 3, **dadurch gekennzeichnet, dass** an einer ersten Seite der Grundplatte (60) die erste Klemmanordnung (51) und die erste Anlageeinrichtung (54) vorgesehen ist, wobei an einer zweiten Seite der Grundplatte (60) die zweite Klemmanordnung (52) und die zweite Anlageeinrichtung (55) vorgesehen ist, wobei an einer dritten Seite der Grundplatte (60) die dritte Klemmanordnung (53) und die dritte Anlageeinrichtung (56) vorgesehen ist, wobei an einer vierten Seite der Grundplatte (60) die vierte Anlageeinrichtung (57) vorgesehen ist, wobei an der vierten Seite der Grundplatte (60) keine Klemmanordnung vorgesehen ist.

11. Rinnenkörperanordnung, umfassend mindestens
- eine Ablaufrinne (1),
- ein erstes Fliesenprofilsegment (41),
- ein zweites Fliesenprofilsegment (42),
- ein drittes Fliesenprofilsegment (43), wobei
- die Ablaufrinne (1) eine erste Seitenwand (11), eine zweite Seitenwand (12), eine erste Stirnwand (13), eine zweite Stirnwand (14) und einen Boden (15) aufweist, wobei
- die Fliesenprofilsegmente (41, 42, 43, 44) als längliche, im Querschnitt L-förmige Profile ausgestaltet sind, umfassend einen ersten Schenkel (411) und einen zweiten Schenkel (412),
**dadurch gekennzeichnet, dass**
zwischen der Ablaufrinne (1) und den Fliesenprofilsegmenten (41, 42, 43, 44) mindestens ein Klemmelement (5a, 5b) gemäß einem der Ansprüche 1 bis 10 angeordnet ist.

12. Rinnenkörperanordnung nach Anspruch 11, **dadurch gekennzeichnet, dass**
- die drei Fliesenprofilsegmente (41, 42, 43) zu einem C-förmigen Rahmen um die Ablaufrinne (1) angeordnet sind, wobei
- die Rinnenkörperanordnung mit einem ersten Klemmelement (5a) und einem zweiten Klemmelement (5b) ausgestattet ist, wobei
- das erste Klemmelement (5a) derart zwischen den Fliesenprofilsegmenten (41, 42) und der Ablaufrinne (1) angeordnet ist, dass die zweite Anlageeinrichtung (55) mit der ersten Seitenfläche (11), die dritte Anlageeinrichtung (56) mit der ersten Stirnfläche (13) und die vierte Anlageeinrichtung (57) mit der zweiten Seitenfläche (12) in Kontakt treten kann, wobei das erste Klemmelement (5a) derart zwischen den Fliesenprofilsegmenten (42, 43) und der Ablaufrinne (1) angeordnet ist, dass die zweite Klemmanordnung (52) lösbar mit dem zweiten Fliesenprofilsegment (42) und die dritte Klemmanordnung (53) lösbar mit dem ersten Fliesenprofilsegment (41) verbunden ist, wobei die erste Klemmanordnung (51) nicht mit einem Fliesenprofilsegment verbunden ist, wobei
- das zweite Klemmelement (5b) derart zwischen den Fliesenprofilsegmenten (42, 43) und der Ablaufrinne (1) angeordnet ist, dass die erste Anlageeinrichtung (54) mit der zweiten Stirnfläche (14), die zweite Anlageeinrichtung (55) mit der ersten Seitenfläche (11) und die vierte Anlageeinrichtung (57) mit der zweiten Seitenfläche (12) in Kontakt treten kann, wobei das zweite Klemmelement (5b) derart zwischen den Fliesenprofilsegmenten (42, 43) und der Ablaufrinne (1) angeordnet ist, dass die erste Klemmanordnung (51) lösbar mit dem dritten Fliesenprofilsegment (43) und die zweite Klemmanordnung (52) lösbar mit dem zweiten Fliesenprofilsegment (42) verbunden ist, wobei die dritte Klemmanordnung (53) nicht mit einem Fliesenprofilsegment verbunden ist.

13. Rinnenkörperanordnung nach Anspruch 11, **dadurch gekennzeichnet, dass**
- ein viertes Fliesenprofilsegment vorgesehen ist, wobei
- die vier Fliesenprofilsegmente zu einem rechteckförmigen Rahmen um die Ablaufrinne angeordnet sind, wobei
- das erste Klemmelement (5a) derart zwischen den Fliesenprofilsegmenten (41, 42, 44) und der Ablaufrinne (1) angeordnet ist, dass die erste Anlageeinrichtung (54) mit der ersten Seitenfläche (11), die zweite Anlageeinrichtung (55) mit der ersten Stirnfläche (13) und die dritte Anlageeinrichtung (56) mit der zweiten Seitenfläche (12) in Kontakt treten kann, wobei das erste Klemmelement (5a) derart zwischen den Fliesenprofilsegmenten (41, 42, 44) und der Ablaufrinne (1) angeordnet ist, dass die erste Klemmanordnung (51) lösbar mit dem zweiten Fliesenprofilsegment (42), die zweite Klemmanordnung (52) lösbar mit dem ersten Fliesenprofilsegment (41) und die dritte Klemmanordnung (53) lösbar mit dem vierten Fliesenprofilsegment (44) verbunden ist, wobei
- das zweite Klemmelement (5b) derart zwischen den Fliesenprofilsegmenten (42, 43, 44) und der Ablaufrinne (1) angeordnet ist, dass die erste Anlageeinrichtung (54) mit der zweiten Seitenfläche (12), die zweite Anlageeinrichtung (55) mit der zweiten Stirnfläche (14) und die dritte Anlageeinrichtung (56) mit der ersten Seitenfläche (11) in Kontakt treten kann, wobei das zweite Klemmelement (5b) derart zwischen den Fliesenprofilsegmenten (42, 43, 44) und der Ablaufrinne (1) angeordnet ist, dass die erste Klemmanordnung (51) lösbar mit dem vierten Fliesenprofilsegment (44), die zweite Klemmanordnung (52) lösbar mit dem dritten Fliesenprofilsegment (43) und die dritte Klemmanordnung (53) lösbar mit dem zweiten Fliesenprofilsegment (42) verbunden ist.

## Claims

1. Clamping element (5a, 5b) for installing a channel body arrangement with a drainage channel (1) and tile profile segments (41, 42, 43, 44), wherein
- the drainage channel (1) has a first side wall (11), a second side wall (12), a first end wall (13), a second end wall (14) and a base (15), wherein
- the tile profile segments (41, 42, 43, 44) are configured as elongate profiles which are L-shaped in cross section, comprising a first leg (411) and a second leg (412), wherein
the clamping element comprises:
- a first clamping arrangement (51), a second clamping arrangement (52) and a third clamping arrangement (53), which are designed for releasable connection to the tile profile segments, and
- at least one bearing device (54, 55, 56, 57) which is designed for bearing against the drainage channel (1), wherein
- the first, second and third clamping arrangement in each case comprises two clamping arms (63), wherein
- the clamping arms (63) are designed to be able to partially engage around the respective second leg (412) of one of the tile profile segments, wherein
- the bearing devices (54, 55, 56, 57) are designed to bear against the respectively associated side surfaces (11, 12) or the respective end surface (13, 14) of the drainage channel (1).

2. Clamping element according to Claim 1, **characterized in that** the clamping element (5a, 5b) is equipped with a first bearing device (54), a second bearing device (55), a third bearing device (56) and a fourth bearing device (57).

3. Clamping element according to either of the preceding claims, **characterized in that** the clamping element (5a, 5b) has a rectangular, preferably a square, baseplate (60).

4. Clamping element according to one of the preceding claims, **characterized in that** the at least one bearing device (54, 55, 56, 57) has a bearing surface (61) which extends vertically or at least approximately vertically from the baseplate (60).

5. Clamping element according to one of the preceding claims, **characterized in that** at least one of the bearing devices (54, 55, 56, 57) is equipped with at least one, preferably two, spacer elements (62).

6. Clamping element according to one of the preceding claims, **characterized in that** the first, second and third clamping arrangements have two pairs of first clamping arms (63) and of second clamping arms (63a), wherein the first clamping arm (63) is designed for fastening a first embodiment of tile profile segments, wherein the second clamping arm (63a) is designed for fastening a further embodiment of tile profile segments.

7. Clamping element according to Claim 6, **characterized in that** a receiving region for a portion of a tile profile segment is formed between the clamping arm (63, 63a) and the bearing device, wherein the first clamping arm (63) forms a first receiving region, wherein the second clamping arm (63a) forms a further receiving region, wherein the receiving regions differ in respect of their dimensions.

8. Clamping element according to Claim 7, **characterized in that** at least one of the clamping arms, preferably the clamping arm or the clamping arms (63) with the smaller receiving regions is or are designed to be removed by pinching off or sawing off.

9. Clamping element according to Claim 7, **characterized in that** at least one of the clamping arms, preferably the clamping arm (63) with the smallest receiving region, is provided with a marking (65) and/or perforation and/or predetermined breaking point.

10. Clamping element according to Claim 3, **characterized in that** the first clamping arrangement (51) and the first bearing device (54) are provided on a first side of the baseplate (60), wherein the second clamping arrangement (52) and the second bearing device (55) are provided on a second side of the baseplate (60), wherein the third clamping arrangement (53) and the third bearing device (56) are provided on a third side of the baseplate (60), wherein the fourth bearing device (57) is provided on a fourth side of the baseplate (60), wherein a clamping arrangement is not provided on the fourth side of the baseplate (60).

11. Channel body arrangement, comprising at least
- a drainage channel (1),
- a first tile profile segment (41),
- a second tile profile segment (42),
- a third tile profile segment (43), wherein
- the drainage channel (1) has a first side wall (11), a second side wall (12), a first end wall (13), a second end wall (14) and a base (15), wherein
- the tile profile segments (41, 42, 43, 44) are configured as elongate profiles which are L-shaped in cross section, comprising a first leg (411) and a second leg (412),
**characterized in that**
at least one clamping element (5a, 5b) according to one of Claims 1 to 10 is arranged between the drainage channel (1) and the tile profile segments (41, 42, 43, 44).

12. Channel body arrangement according to Claim 11, **characterized in that**
- the three tile profile segments (41, 42, 43) are arranged to form a C-shaped frame around the drainage channel (1), wherein
- the channel body arrangement is equipped with a first clamping element (5a) and a second clamping element (5b), wherein
- the first clamping element (5a) is arranged between the tile profile segments (41, 42) and the drainage channel (1) in such a manner that the second bearing device (55) can enter into contact with the first side surface (11), the third bearing device (56) can enter into contact with the first end surface (13) and the fourth bearing device (57) can enter into contact with the second side surface (12), wherein the first clamping element (5a) is arranged between the tile profile segments (42, 43) and the drainage channel (1) in such a manner that the second clamping arrangement (52) is connected releasably to the second tile profile segment (42) and the third clamping arrangement (53) is connected releasably to the first tile profile segment (41), wherein the first clamping arrangement (51) is not connected to a tile profile segment, wherein
- the second clamping element (5b) is arranged between the tile profile segments (42, 43) and the drainage channel (1) in such a manner that the first bearing device (54) can enter into contact with the second end surface (14), the second bearing device (55) can enter into contact with the first side surface (11) and the fourth bearing device (57) can enter into contact with the second side surface (12), wherein the second clamping element (5b) is arranged between the tile profile segments (42, 43) and the drainage channel (1) in such a manner that the first clamping arrangement (51) is connected releasably to the third tile profile segment (43) and the second clamping arrangement (52) is connected releasably to the second tile profile segment (42), wherein the third clamping arrangement (53) is not connected to a tile profile segment.

13. Drainage body arrangement according to Claim 11, **characterized in that**
- a fourth tile profile segment is provided, wherein
- the four tile profile segments are arranged to form a rectangular frame around the drainage channel, wherein
- the first clamping element (5a) is arranged between the tile profile segments (41, 42, 44) and the drainage channel (1) in such a manner that the first bearing device (54) can enter into contact with the first side surface (11), the second bearing device (55) can enter into contact with the first end surface (13) and the third bearing device (56) can enter into contact with the second side surface (12), wherein the first clamping element (5a) is arranged between the tile profile segments (41, 42, 44) and the drainage channel (1) in such a manner that the first clamping arrangement (51) is connected releasably to the second tile profile segment (42), the second clamping arrangement (52) is connected releasably to the first tile profile segment (41) and the third clamping arrangement (53) is connected releasably to the fourth tile profile segment (44), wherein
- the second clamping element (5b) is arranged between the tile profile segments (42, 43, 44) and the drainage channel (1) in such a manner that the first bearing device (54) can enter into contact with the second side surface (12), the second bearing device (55) can enter into contact with the second end surface (14) and the third bearing device (56) can enter into contact with the first side surface (11), wherein the second clamping element (5b) is arranged between the tile profile segments (42, 43, 44) and the drainage channel (1) in such a manner that the first clamping arrangement (51) is connected releasably to the fourth tile profile segment (44), the second clamping arrangement (52) is connected releasably to the third tile profile segment (43) and the third clamping arrangement (53) is connected releasably to the second tile profile segment (42).

## Revendications

1. Élément de serrage (5a, 5b) pour le montage d'un agencement de caniveau comprenant un canal d'écoulement (1) et des segments profilés de carreaux (41, 42, 43, 44),
- le canal d'écoulement (1) présentant une première paroi latérale (11), une deuxième paroi latérale (12), une première paroi frontale (13), une deuxième paroi frontale (14) et un fond (15),
- les segments profilés de carreaux (41, 42, 43, 44) étant configurés sous forme de profilés allongés de section transversale en forme de L, comprenant une première branche (411) et une deuxième branche (412),
l'élément de serrage comprenant :
- un premier agencement de serrage (51), un deuxième agencement de serrage (52) et un troisième agencement de serrage (53), qui sont prévus pour la connexion amovible aux segments profilés de carreaux,
- et au moins un dispositif d'appui (54, 55, 56, 57) qui est prévu pour s'appuyer contre le canal d'écoulement (1),
- le premier, deuxième et troisième agencement de serrage comprenant à chaque fois deux bras de serrage (63),
- les bras de serrage (63) étant prévus pour pouvoir venir en prise en partie autour de la deuxième branche respective (412) de l'un des segments profilés de carreaux,
- les dispositifs d'appui (54, 55, 56, 57) étant prévus pour s'appuyer contre les surfaces latérales à chaque fois associées (11, 12) ou la surface frontale respective (13, 14) du canal d'écoulement (1).

2. Élément de serrage selon la revendication 1, **caractérisé en ce que** l'élément de serrage (5a, 5b) est pourvu d'un premier dispositif d'appui (54), d'un deuxième dispositif d'appui (55), d'un troisième dispositif d'appui (56) et d'un quatrième dispositif d'appui (57).

3. Élément de serrage selon l'une quelconque des revendications précédentes, **caractérisé en ce que** l'élément de serrage (5a, 5b) présente une plaque de base (60) rectangulaire, de préférence quadratique.

4. Élément de serrage selon l'une quelconque des revendications précédentes, **caractérisé en ce que** l'au moins un dispositif d'appui (54, 55, 56, 57) présente une surface d'appui (61) qui s'étend perpendiculairement ou au moins approximativement perpendiculairement depuis la plaque de base (60).

5. Élément de serrage selon l'une quelconque des revendications précédentes, **caractérisé en ce qu'**au moins l'un des dispositifs d'appui (54, 55, 56, 57) est muni d'au moins un, de préférence de deux, éléments d'espacement (62).

6. Élément de serrage selon l'une quelconque des revendications précédentes, **caractérisé en ce que** le premier, le deuxième et le troisième agencement de serrage présentent deux paires de premiers bras de serrage (63) et de deuxième bras de serrage (63a), le premier bras de serrage (63) étant prévu pour la fixation d'une première forme de réalisation de segments profilés de carreaux, le deuxième bras de serrage (63a) étant prévu pour la fixation d'une forme de réalisation supplémentaire de segments profilés de carreaux.

7. Élément de serrage selon la revendication 6, **caractérisé en ce qu'**entre le bras de serrage (63, 63a) et le dispositif d'appui est réalisée une région de réception pour une portion d'un segment profilé de carreau, le premier bras de serrage (63) constituant une première région de réception, le deuxième bras de serrage (63a) constituant une région de réception supplémentaire, les régions de réception étant différentes en termes de leurs dimensions.

8. Élément de serrage selon la revendication 7, **caractérisé en ce qu'**au moins l'un des bras de serrage, de préférence le ou les bras de serrage (63) ayant les plus petites régions de réception sont prévus pour être enlevés par découpage ou sciage.

9. Élément de serrage selon la revendication 7, **caractérisé en ce qu'**au moins l'un des bras de serrage, de préférence le bras de serrage (63) avec la plus petite région de réception, est pourvu d'un marquage (65) et/ou d'une perforation et/ou d'une zone destinée à la rupture.

10. Élément de serrage selon la revendication 3, **caractérisé en ce qu'**au niveau d'un premier côté de la plaque de base (60) sont prévus le premier agencement de serrage (51) et le premier dispositif d'appui (54), au niveau d'un deuxième côté de la plaque de base (60) étant prévus le deuxième agencement de serrage (52) et le deuxième dispositif d'appui (55), au niveau d'un troisième côté de la plaque de base (60) étant prévus le troisième agencement de serrage (53) et le troisième dispositif d'appui (56), au niveau d'un quatrième côté de la plaque de base (60) étant prévu le quatrième dispositif d'appui (57), au niveau du quatrième côté de la plaque de base (60), aucun agencement de serrage n'étant prévu.

11. Agencement de caniveau, comprenant au moins
- un canal d'écoulement (1),
- un premier segment profilé de carreau (41),
- un deuxième segment profilé de carreau (42),
- un troisième segment profilé de carreau (43),
- le canal d'écoulement (1) présentant une première paroi latérale (11), une deuxième paroi latérale (12), une première paroi frontale (13), une deuxième paroi frontale (14) et un fond (15),
- les segments profilés de carreaux (41, 42, 43, 44) étant réalisés sous forme de profilés allongés de section transversale essentiellement en forme de L, comprenant une première branche (411) et une deuxième branche (412),
**caractérisé en ce**
**qu'**au moins un élément de serrage (5a, 5b) selon l'une quelconque des revendications 1 à 10 est disposé entre le canal d'écoulement (1) et les segments profilés de carreaux (41, 42, 33, 44).

12. Agencement de caniveau selon la revendication 11, **caractérisé en ce que**
- les trois segments profilés de carreaux (41, 42, 43) sont disposés pour former un cadre en forme de C autour du canal d'écoulement (1),
- l'agencement de caniveau étant muni d'un premier élément de serrage (5a) et d'un deuxième élément de serrage (5b),
- le premier élément de serrage (5a) étant disposé entre les segments profilés de carreaux (41, 42) et le canal d'écoulement (1) de telle sorte que le deuxième dispositif d'appui (55) puisse venir en contact avec la première surface latérale (11), que le troisième dispositif d'appui (56) puisse venir en contact avec la première surface frontale (13) et que le quatrième dispositif d'appui (57) puisse venir en contact avec la deuxième surface latérale (12), le premier élément de serrage (5a) étant disposé entre les segments profilés de carreaux (42, 43) et le canal d'écoulement (1) de telle sorte que le deuxième agencement de serrage (52) soit connecté de manière amovible au deuxième segment profilé de carreau (42) et que le troisième agencement de serrage (53) soit connecté de manière amovible au premier segment profilé de carreau (41), le premier agencement de serrage (51) n'étant connecté à aucun segment profilé de carreau,
- le deuxième élément de serrage (5b) étant disposé entre les segments profilés de carreaux (42, 43) et le canal d'écoulement (1) de telle sorte que le premier dispositif d'appui (54) puisse venir en contact avec la deuxième surface frontale (14), que le deuxième dispositif d'appui (55) puisse venir en contact avec la première surface latérale (11) et que le quatrième dispositif d'appui (57) puisse venir en contact avec la deuxième surface latérale (12), le deuxième élément de serrage (5b) étant disposé entre les segments profilés de carreaux (42, 43) et le canal d'écoulement (1) de telle sorte que le premier agencement de serrage (51) soit connecté de manière amovible au troisième segment profilé de carreau (43) et que le deuxième agencement de serrage (52) soit connecté de manière amovible au deuxième segment profilé de carreau (42), le troisième agencement de serrage (53) n'étant connecté à aucun segment profilé de carreau.

13. Agencement de caniveau selon la revendication 11, **caractérisé en ce**
- **qu'**un quatrième segment profilé de carreau est prévu,
- les quatre segments profilés de carreaux étant disposés autour du canal d'écoulement pour former un cadre rectangulaire,
- le premier élément de serrage (5a) étant disposé entre les segments profilés de carreaux (41, 42, 44) et le canal d'écoulement (1) de telle sorte que le premier dispositif d'appui (54) puisse venir en contact avec la première surface latérale (11), que le deuxième dispositif d'appui (55) puisse venir en contact avec la première surface frontale (13) et que le troisième dispositif d'appui (56) puisse venir en contact avec la deuxième surface latérale (12), le premier élément de serrage (5a) étant disposé entre les segments profilés de carreaux (41, 42, 44) et le canal d'écoulement (1) de telle sorte que le premier agencement de serrage (51) soit connecté de manière amovible au deuxième segment profilé de carreau (42), que le deuxième agencement de serrage (52) soit connecté de manière amovible au premier segment profilé de carreau (41) et que le troisième agencement de serrage (53) soit connecté de manière amovible au quatrième segment profilé de carreau (44),
- le deuxième élément de serrage (5b) étant disposé entre les segments profilés de carreaux (42, 43, 44) et le canal d'écoulement (1) de telle sorte que le premier dispositif d'appui (54) puisse venir en contact avec la deuxième surface latérale (12), que le deuxième dispositif d'appui (55) puisse venir en contact avec la deuxième surface latérale (14) et que le troisième dispositif d'appui (56) puisse venir en contact avec la première surface latérale (11), le deuxième élément de serrage (5b) étant disposé entre les segments profilés de carreaux (42, 43, 44) et le canal d'écoulement (1) de telle sorte que le premier agencement de serrage (51) soit connecté de manière amovible au quatrième segment profilé de carreau (44), que le deuxième agencement de serrage (52) soit connecté de manière amovible au troisième segment profilé de carreau (43) et que le troisième agencement de serrage (53) soit connecté de manière amovible au deuxième segment profilé de carreau (42).
